# EUROPEAN PATENT APPLICATION

(11) **EP 1 661 455 A1**
(43) Date of publication of application: **31.05.2006**
(21) Application number: 05111092.2
(22) Date of filing: 22.11.2005
(51) Int. Cl.: A01K 31/08

(54) **Cage for birds or other pets provided with interchangeable wall means**

(30) Priority: 24.11.2004 IT VR20040186
(71) Applicant: FERPLAST S.P.A., I-36070 Castelgomberto (IT)
(72) Inventor: Vaccari, Carlo, 36070, CASTELGOMBERTO (VI) (IT)
(74) Representative: Petraz, Gilberto Luigi

(57) **Abstract**

A cage for birds or other small pets comprises a container base (10) and a metal grid structure (11) which can be inserted in the base (10); the metal grid structure (11) forms three walls (12, 13, 14), that is the two sides and the top of the cage, and can be attached to a series of profiles (15, 16 and 17) which are positioned in correspondence with the angular sectors of the cage, at least one pair of these profiles (15) being equipped with grooves (19, 20) to slidingly accommodate interchangeable panels (21, 22).

## Description

### TECHNICAL FIELD

This invention concerns a cage for birds, or other small pets typically suited to be kept in closed surroundings, which is equipped with means to allow the walls to be interchanged.

More specifically, this invention refers to a cage which consists of a structure that allows not only the walls to be interchanged but also allows different compositions, for example creating a cage which on the three short sides is closed with the traditional metal grid while different closing surfaces, made for example from transparent material and cardboard, can be inserted in multiple guides near the two long walls.

The solution according to this invention offers greater versatility, for example by giving the cage a different appearance with respect to the traditional metal grid.

This invention can be applied in the production sector of cages for small pets, such as birds, rodents, reptiles and the like.

### BACKGROUND ART

It is known that cages are structures for containing small pets and comprise a base, a roof and four walls each consisting of horizontal and vertical metal wires which are spaced so as not to allow the enclosed animal to pass through, and are electrowelded at their intersecting points.

Each wall is generally fixed to the other walls by the use of an electrowelded metal wire frame, or in other cases by the use of sections that form a structure of uprights and crossbeams.

One disadvantage of this construction feature of the cages known to the background art is that they substantially present a structure made up of bars, which makes them particularly unattractive and in some ways even oppressive, since such a structure brings to mind places of forced confinement.

Structures made from bars, moreover, do not offer the possibility of adding inserts such as backgrounds, images or other finishing or closing elements, it being extremely difficult if not impossible to apply and fix panels or flat surfaces for aesthetic and ornamental purposes to the metal grid.

### DESCRIPTION OF THE INVENTION

This invention proposes to provide a cage for birds, small rodents or other small pets, which is made in such a way as to eliminate or at least reduce the drawbacks indicated above.

First of all, the cage according to the invention is equipped with means designed to allow the positioning of walls, and in particular transparent, opaque or decorative walls made from materials such as glass, plastic or resin, or alternatively combined with decorative panels.

Secondarily, the cage according to the invention comprises means that allow the walls to be interchanged, such as for example to allow the various operations for cleaning the cage without the risk of the pet escaping.

The invention also proposes to provide a cage for birds or small pets that can be produced easily and economically in order to be productively advantageous.

This is achieved by producing a cage for small pets, with the features described in the main claim.

The dependent claims of the solution in question describe advantageous embodiments of the invention.

The cage according to the invention therefore substantially consists of a metal grid structure forming the two side walls joined to the top of the cage, the grid structure being inserted in a base and being connectable to a series of profile sections which are positioned at all the angular sectors of the cage.

The profile sections that are inserted in the angular sectors of the cage, and more specifically the vertical angular sectors, are shaped in such a way to present a first single hollow groove designed for insertion of the metal grid and additional multiple grooves in which the interchangeable panels can be slidingly inserted.

These single and multiple grooves are positioned at right angles to each other, so as to allow the metal grid sides of the cage to be alternated with adjacent interchangeable front and back walls.

According to a preferred solution of the invention there are two interchangeable walls for each of the front and back sectors of the cage, and the two interchangeable walls of each sector are preferably represented by a transparent wall made from Plexiglas, polystyrene or the like, and an opaque wall which can also be associated with images, backgrounds or other means of illustration, forming decorative panels.

It is also possible to have two panels on the same side so that one can be removed for cleaning or replacement, without the risk of the animal escaping as it is prevented from doing so by the other panel. The two-panel solution can, if required, even be used only during maintenance operations.

### DESCRIPTION OF THE DRAWINGS

Additional features and advantages of the invention will become evident on reading the following description of one embodiment of the invention, given as a non-binding example, with the help of the accompanying drawings, in which:
- figure 1 represents the cage in which all the components are shown in exploded view;

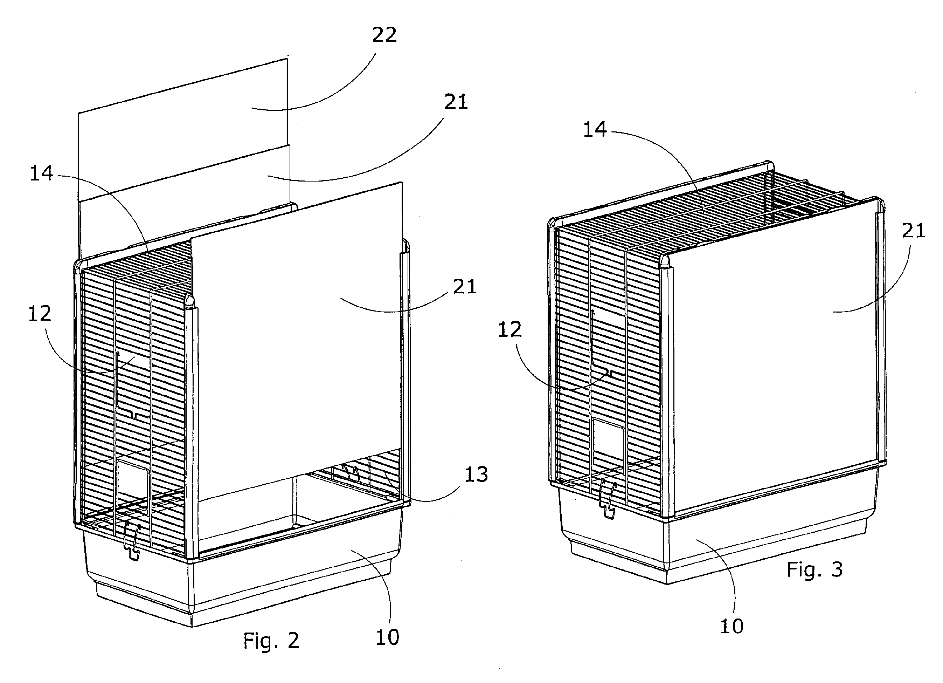

- figure 2 is a schematic view of the assembled cage with the walls in a partially raised position;
- figure 3 is a schematic view of the fully assembled cage with all the walls closed;
- figure 4 is a schematic cross-section view of one of the uprights fitted in the vertical angular sections of the cage;
- figure 5 is a schematic view of the two panels that can be inserted in the two outer grooves of each vertical profile section;
- figure 6 is a schematic and prospective view of the vertical profile section;

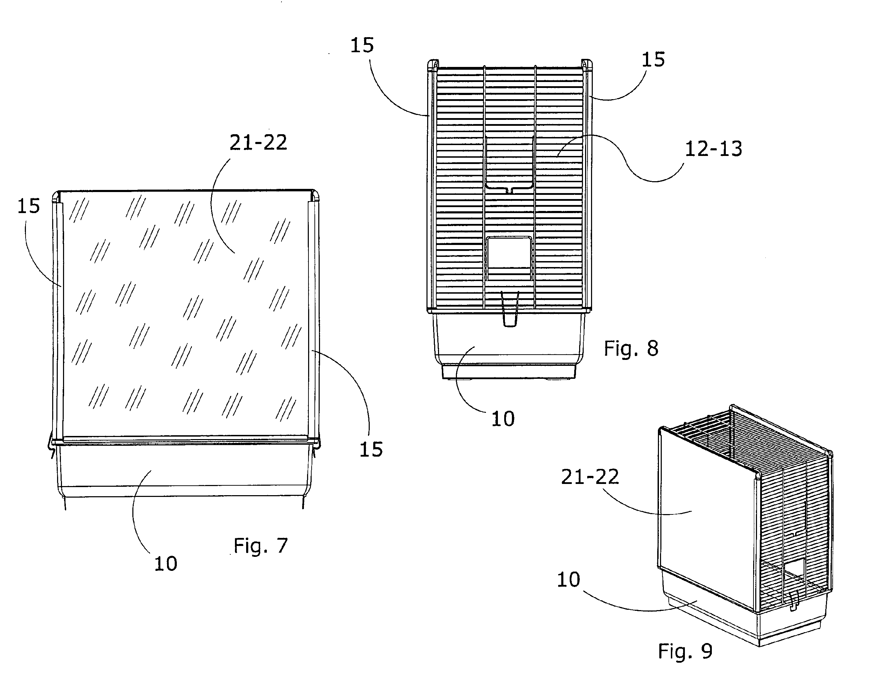

- figure 7 shows the schematic front view of the cage according to the invention;
- figure 8 shows a side view of the cage according to the invention;
- figure 9 is a schematic three-dimensional view of the cage;

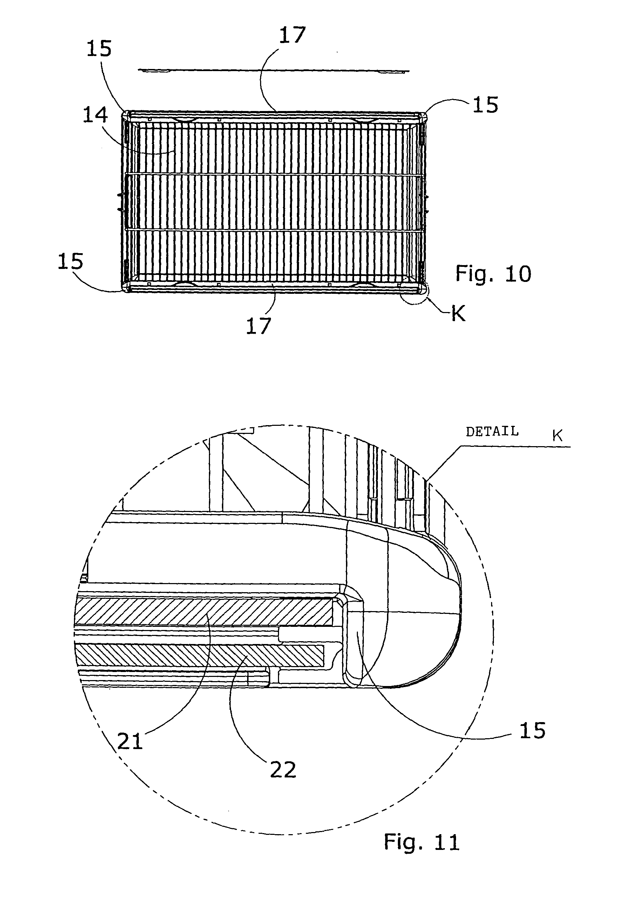

- figure 10 is a schematic plan view; and
- figure 11 is a schematic view of the detail "K" in figure 10.

### DESCRIPTION OF ONE EMBODIMENT OF THE INVENTION

With reference to the accompanying figures, the cage according to the invention presents the particular feature of consisting of a structure that allows the use of transparent walls or walls with backgrounds, decorative motifs or other forms of decoration.

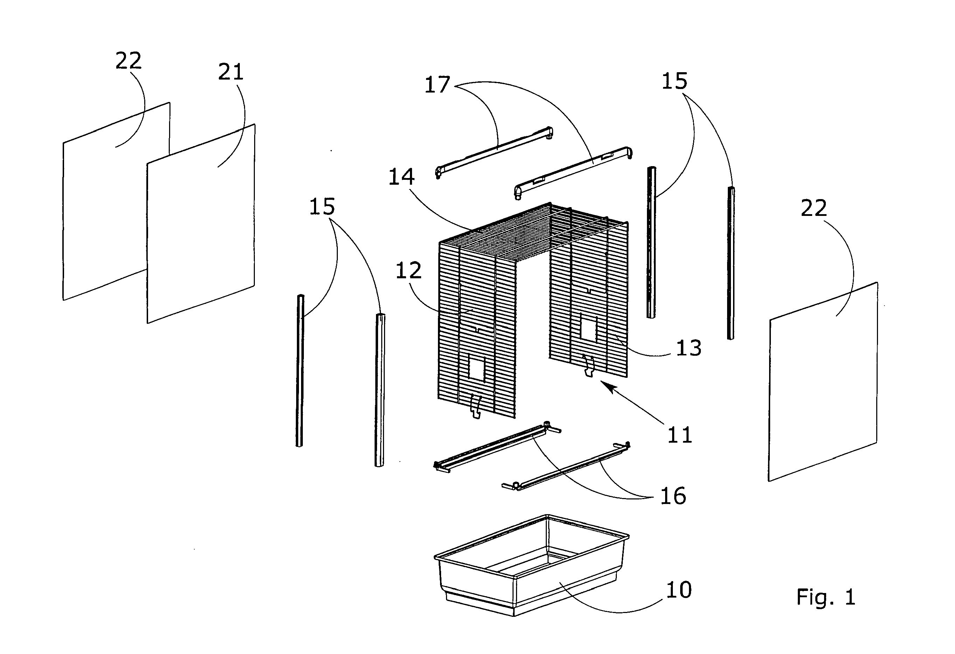

The cage according to the invention substantially consists of the following components shown in exploded view in figure 1: a container base 10, a metal grid structure 11 which forms the two side walls 12 and 13 joined to the top 14 of the cage, this structure being insertable in the base 10 and connectable to a series of profile sections 15, 16 and 17 which are positioned in correspondence with all the angular sectors of the cage.

More specifically, the profiles 15 are inserted in the vertical angular sections of the cage, while those indicated with 16 are fitted on the lower horizontal or base angular sectors and those indicated with 17 are fitted on the upper horizontal angular sectors.

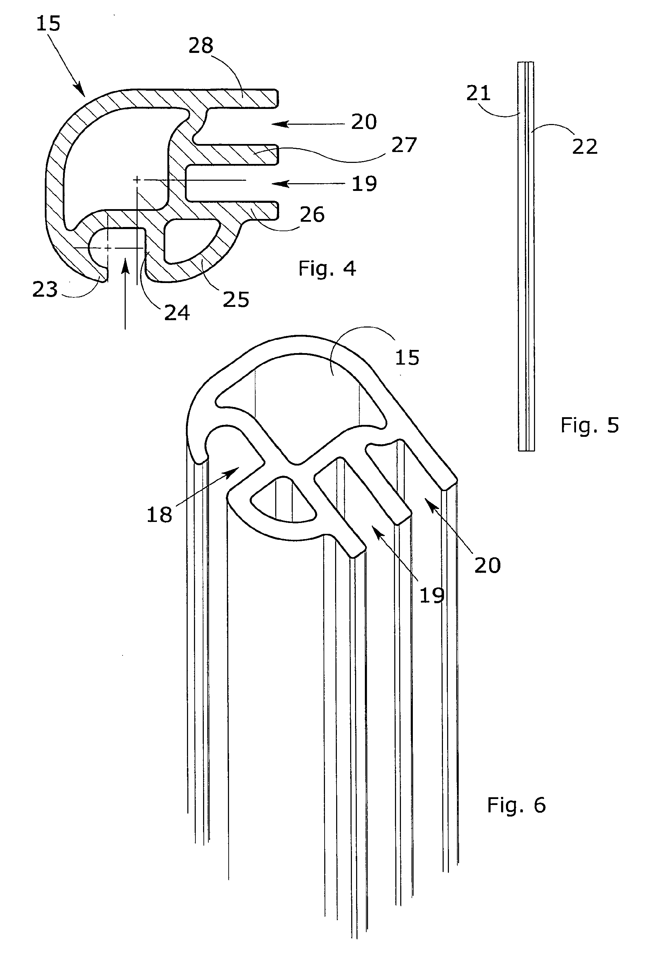

As shown in figures 4 and 6, the vertical profiles 15 are shaped in such a way as to present a first single groove 18, in which the edges of the metal grid 11 are inserted, and additional multiple grooves 19 and 20, which form guides and in which the interchangeable panels 21 and 22 are slidingly inserted.

The single groove 18 is bordered on one side by a first curved projection 23 and on the other side by a wall 24 which is part of an intermediate sector 25.

The profiles 16, being fixed on the columns in turn fixed on the profiles 17, create a structure which is integral with the grid, allowing the upper part of the cage to be detached from the base for maintenance, while holding the panels in place and thus preventing the animal from escaping.

The upper part of the cage can be rested on a surface with the animal inside and, as can be imagined, if the panels were not integral with the structure the animal would escape.

In the same way, the multiple grooves 19 and 20, which act as guides, are bordered by parallel walls 26, 27 and 28 which are positioned at right angles to the single groove 18.

The single groove 18 is in fact designed to accommodate the edge of the metal grid 11, and more specifically the edges of the two vertical sides 12 and 13, while the double grooves 19 and 20, which act as guides, are designed to accommodate the two panel walls 21 and 22 which are positioned at right angles with respect to the previous metal grid walls.

Finally, the lower 16 and upper 17 horizontal profiles act as finishing elements for containing the sliding and interchangeable walls 21 and 22.

According to a preferred embodiment, these sliding and interchangeable walls 21 and 22 can consist of a transparent panel 21 made from Plexiglas, polystyrene or other suitable material, and an opaque panel 22, made for example from cardboard, PVC or plastic, illustrated with images, backgrounds or other means of decoration.

The use of the interchangeable walls described above is now evident and in fact they are positioned by simply inserting one or the other or both walls 21 and 22 vertically from above by means of the guide grooves 19 and 20 facing each other on both sides of the cage.

The arrangement of the vertical profiles 15 and of the respective grooves, together with the insertion direction of the panels, can also be horizontal, this solution still being included in the same inventive concept.

According to other embodiments, the panels 21 and 22 can be made from any material considered suitable, either transparent or opaque, and of any consistency, whether solid, honeycomb or partially open, including motifs and/or images of any kind, also of a personalised nature or according to fashion trends.

It is also possible to fit the profiles and respective mobile walls on either the front or the rear face of the cage, but also on just one of the two faces or on the sides or the top.

Finally, by using special multiple profiles, the interchangeable panels can also be fitted on adjacent sides and even on all sides of the cage.

Any other arrangement of the interchangeable panels, including intermediate solutions between those described above, can also be foreseen and can be considered as included within the scope of the invention.

The invention is described above with reference to a preferred embodiment. It is nevertheless clear that the invention is susceptible to numerous variations included within the scope of the invention, in the framework of technical equivalents.

## Claims

1. A cage for birds or other small pets comprising a container base (10) and a metal grid structure (11) which can be inserted in the base (10) **characterised in that** the metal grid structure (11) forms three walls (12, 13, 14), that is the two sides and the top of the cage, and **in that** the metal grid structure can be attached to a series of profiles (15, 16 and 17) which are positioned in correspondence with the angular sectors of the cage, and at least one pair of these profiles (15) being equipped with grooves (19, 20) to slidingly accommodate interchangeable panels (21, 22).

2. A cage for birds or other small pets according to the foregoing claim, **characterised in that** at least the vertical profiles (15) are shaped in such a way as to present a first single groove (18) and additional multiple grooves (19, 20) positioned at right angles with respect to the previous groove (18).

3. A cage for birds or other small pets according to either of the foregoing claims, **characterised in that** the vertical edges (12, 13) of the metal grid (11) are inserted in the single groove (18) of the profile (15) and **in that** the interchangeable panels (21, 22) are slidingly inserted in the multiple grooves (19, 20), which are positioned at right angles to the previous groove (18) and which act as guides.

4. A cage for birds or other small pets according to any of the foregoing claims, **characterised in that** the single groove (18) of the profile (15) is bordered on one side by a first curved projection (23) and on the other side by a wall (24) forming part of an intermediate sector (25).

5. A cage for birds or other small pets according to any of the foregoing claims, **characterised in that** the multiple grooves (19, 20) of the profile (15), which act as guides, are bordered by parallel walls (26, 27, 28) which are positioned at right angles with respect to the single groove (18).

6. A cage for birds or other small pets according to any of the foregoing claims, **characterised in that** the single groove (18) of the profile (15) is designed to accommodate the edge of the metal grid (11), and more specifically the edges of the two vertical sides (12, 13), while the double grooves (19, 20), which act as guides, are designed to accommodate the two panel walls (21, 22) which are positioned at right angles with respect to the previous metal grid walls.

7. A cage for birds or other small pets according to any of the foregoing claims, **characterised in that** the panels (21, 22) are made from transparent material such as Plexiglas, polystyrene or other suitable material, and from opaque material for example cardboard, PVC or plastic, also decorated with images, backgrounds or the like.

8. A cage for birds or other small pets according to any of the foregoing claims, **characterised in that** the panels (21, 22) can be made from any appropriate material, transparent or opaque, and of any consistency, whether solid, honeycomb or partially open, including motifs and/or images.
